# EUROPEAN PATENT APPLICATION

(11) **EP 1 626 404 A2**
(43) Date of publication of application: **15.02.2006**
(21) Application number: 05107324.5
(22) Date of filing: 09.08.2005
(51) Int. Cl.: G11B 15/665, G11B 15/61

(54) **A tape deck**

(30) Priority: 09.08.2004 KR 2004062283
(71) Applicant: Samsung Electronics Co, Ltd, Suwon-si, Gyeonggi-do 442-742 (KR)
(72) Inventor: Oh, Jeong-hyeob 309-1005,Chowon-maeul Daewon Apt., Gyeonggi-do (KR); Kim, Myoung-joon 2-201,Green Villa, Suwon-si Gyeonggi-do (KR); Baik, Chung-hum 106-1102,Dongsuwon LG Village, Gyeonggi-do (KR); Kim, Bong-joo 208-1001,Dongsuwon LG Village, Gyeonggi-do (KR); Kim, Jun-young 108-1904, Dongsuwon LG Village 1st, Gyeonggi-do (KR); Cho, Young-ho 101-502,Samsung Apt., Gyeonggi-do (KR); Seo, Jae-kab 114-507, 101-114,, Suwon-si Gyeonggi-do (KR)
(74) Representative: Geary, Stuart Lloyd

(57) **Abstract**

A magnetic recording and reproducing device for enhancing the operation efficiency by reducing the number of parts and providing an improved structure is provided. The magnetic recording and reproducing device includes a pole base assembly for loading a magnetic tape by guiding the magnetic tape so that the magnetic tape is wound on a head drum and for unloading the magnetic tape by returning the magnetic tape from the head drum; a deck having a guide rail formed thereon, the guide rail including an insertion recess into which the pole base assembly is inserted and a slit connected to the insertion recess to guide the loading and unloading of the pole base assembly; and a deviation preventing unit for preventing the deviation of the pole base assembly inserted into the guide rail.

## Description

The present invention relates to a tape deck having a pole base assembly movable along a guide formed in the deck.

Recently, small portable image photographing devices (sometimes called camera apparatuses) which can be used in for capturing photographs of outdoor events, hobbies, and leisure activities are in demand. Conventional analogue type image photographing products are being replaced by digital cameras, digital camcorders, and the like, as the use of digital images becomes more mainstream.

As is generally known, a camcorder is a type of image-photographing device that provides functions for recording, reproducing (or playing back), and editing image information as the functions of a tape recorder and a camera are combined together in one body. Such an image photographing device typically uses a magnetic tape of, for example, 8 mm, 6 mm, and 4 mm as the recording medium. Therefore, a magnetic recording and playback device which scans the magnetic tape using a magnetic head allowing the image information to be recorded and/or played back to and from the tape is mounted on a typical camcorder.

Generally, the magnetic recording and playback device includes a main deck onto which a head drum for scanning the magnetic tape is rotatably installed. Also the device has a sub-deck which is reciprocally and slidably installed to the main deck. If a tape cassette is mounted on the sub-deck, the sub-deck is moved towards the head drum to be loaded. When loading, a pair of pole base assemblies which are slidably installed on the main deck withdraw the magnetic tape so as to be wound around the head drum.

Therefore, a separate rail plate which has a guide rail for guiding the pole base assemblies is installed on the main deck.

A tension pole for guiding the movement of the magnetic tape, a capstan shaft, pinch roller, and a review pole are also installed on the main deck.

The above-mentioned magnetic recording and playback device includes many component elements including the sub-deck installed on the main deck, and the rail plate. For this reason, the structure of this device is complicated to manufacture, which decreases productivity and increases production costs.

Therefore, there are continuous efforts to develop a magnetic recording and playback device capable of loading and unloading a magnetic tape just using only one deck (i.e. when the sub-deck is removed). Furthermore, a structure is being developed in which a guide rail for guiding the movement of the pole base assembly is directly installed to the deck instead of using the rail plate in the additional sub-deck.

Accordingly, there is a need for a recording and playback apparatus having a simplified structure for loading and unloading a tape.

Embodiments of the present invention solve at least the problems of the prior art discussed above and provide other advantages as will be apparent from the following description.

Accordingly, the present invention relates to a tape deck having a pole base assembly movable along a guide formed in the deck.

A tape deck according to the present invention is characterised in that the pole assembly has a portion for retaining the assembly in the guide and the guide being formed with an insertion portion allowing the portion of the pole base assembly to pass therethrough.

Other additional and/or preferable features are set forth in claims 2-4 appended hereto.

An embodiment of the present invention will now be described, by way of example only, and with reference to the accompanying Figures, in which:
Figure 1 is an exploded perspective view illustrating a magnetic recording and playback device according to an embodiment of the present invention;
Figure 2 is a plan view illustrating the magnetic recording and reproducing device of Figure 1;
Figure 3 is an exploded perspective view illustrating essential parts of the magnetic recording and reproducing device of Figure 1;
Figure 4 is a plan view illustrating a loading state in Figure 2; and
Figures. 5A to 5C are schematic perspective views which are drawn to explain the assembling processes of pole base assemblies in Figure 1.

Throughout the drawings, like reference numbers should be understood to refer to like features, elements, and structures.

Hereinafter, a magnetic recording and reproducing device according to an exemplary embodiment of the present invention will be described with reference to the attached drawings.

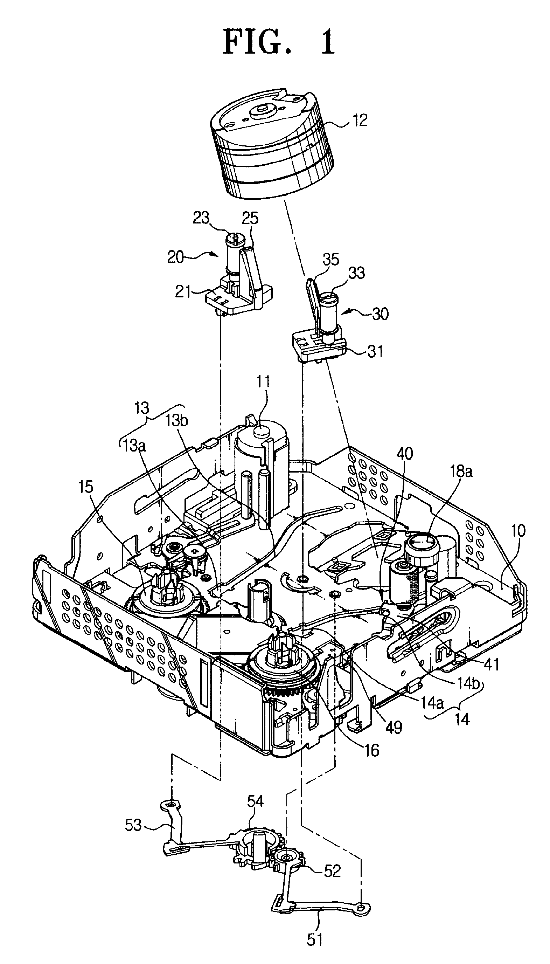

Referring to Figure 1, the device includes a deck 10 in which a series of driving units such as a loading motor 11 and a head drum 12 are installed. A pair of pole base assemblies 20 and 30 are slidably installed on the deck 10. A deviation preventing unit 40 prevents the pole base assemblies 20 and 30 from being separated from the deck 10.

The deck 10 is a one-chassis type deck as it's four sidewalls are preferably integrally formed, and does not require a known sub-deck. The deck 10 has a pair of guide rails 13, 14 in which the pole base assemblies 20, 30 are respectively connected to be moved backwards and forwards. The guide rails 13, 14 respectively have insertion recesses 13a, 14a into which the pole base assemblies 20, 30 are inserted for assembling, and slits 13b, 14b which are connected with the insertion recesses 13a, 14a. The pole base assemblies 20, 30, which are inserted into and engage with the insertion recesses 13a, 14a, are moved along the slits 13b, 14b loading or unloading the magnetic tape to or from a head drum 12.

The pair of pole base assemblies 20, 30 respectively include pole bases 21, 31 which are moved along the guide rails 13, 14, and a plurality of guide members 23, 25 and 33, 35 which are supported by the pole bases 21, 31 to guide the movement of the magnetic tape. The shape and the number of the guide members 23, 25 and 33, 35 may be varied in the embodiments.

The pair of pole base assemblies 20, 30 are connected to end portions of links 51, 53 when the pole base assemblies 20, 30 are respectively inserted into the insertion recesses 13a, 14a. The links 51, 53 are link-connected to loading gears 52, 54 which are rotatably installed on the lower side of the deck 10. The loading gears 52, 54 are rotated with respect to each other to load or unload the pole base assemblies 20, 30.

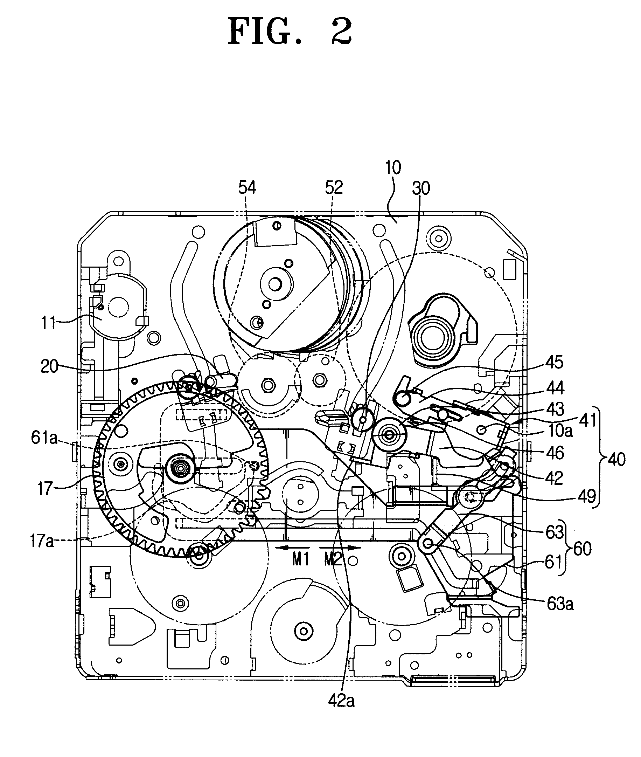

One of the loading gears 52, 54, as shown in Figure 2, is connected to and moved in association with a main cam gear 17 installed in the deck 10. The main cam gear 17 is rotated by the power transferred from the loading motor 11 via a power transmission unit (not shown).

A pair of reel tables 15, 16 which engage a tape reel of a tape cassette is installed in the deck 10.

Even though the pole base assemblies 20, 30 are connected to the links 51, 53 when they are inserted into the insertion recesses 13a, 14a, they can be withdrawn through the insertion recesses 13a, 14a. Therefore, the deviation preventing unit 40 is provided to prevent the pole base assemblies 20, 30 from being separated from the guide rails 13, 14. The deviation preventing unit 40 includes a pivoting unit 41 which is pivotably installed in the deck 10, as well as a connection movement unit 60 and a restriction boss 49 which are installed in the deck 10 to restrict the pivoting range of the pivoting unit 41.

The pivoting unit 41 includes a pinch arm 42 which is pivotably installed in the deck 10, a review arm 44 which is installed coaxially with and pivots together with the pinch arm 42, and a spring 46 which connects the pinch arm 42 to the review arm 44. A pinch roller 43 is rotatably installed to the free end of the pinch arm 42.

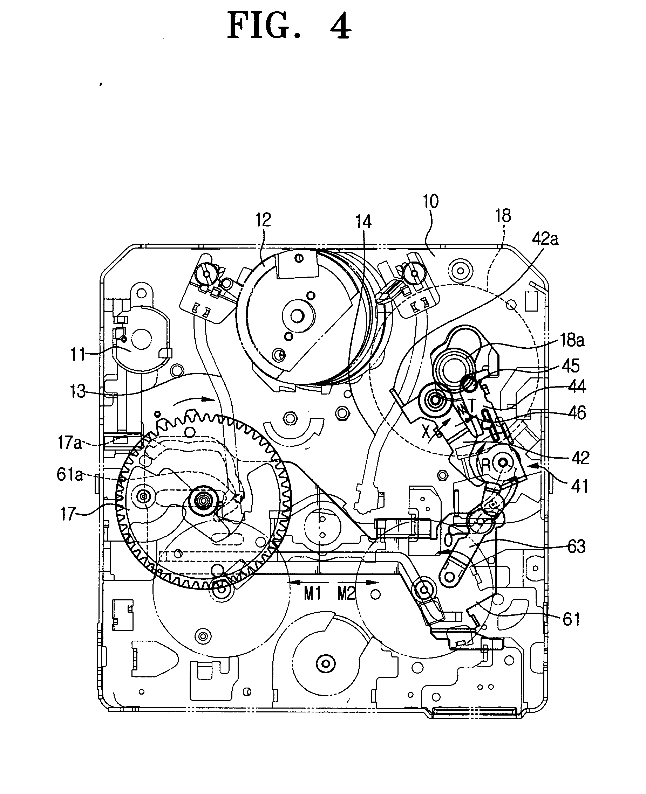

The pinch arm 42 is pivoted to a first position as shown in Figure 4 to guide the movement of the magnetic tape when the pole base assemblies 20, 30 are loaded. In the first position, the pinch roller 43 presses against a capstan shaft 18a to guide the magnetic tape. The capstan shaft 18a is rotated by a capstan motor 18 which is installed on the lower side of the deck 10. The power of the capstan motor 18 is used to drive the reel tables 15, 16.

A review pole 45 is installed on an end portion of the review arm 44. When the review arm 44 is moved to the first position together with the pinch arm 42, the review pole 45 guides the movement of the magnetic tape.

The pivoting range of the pivoting unit 41 is restricted since it is connected to the connection movement unit 60 which is movably installed in the deck 10. The connection movement unit 60 includes a sliding member 61 which is slides backwards and forwards and is installed in the deck 10. This is moved by a main cam gear 17. Also provided in the connection movement unit 60 is a connection movement member 63 which connects the sliding member 61 to the pivoting unit 41. The details of the connection mechanism of the connection movement unit 60 and the pivoting unit 41 will be described as follows.

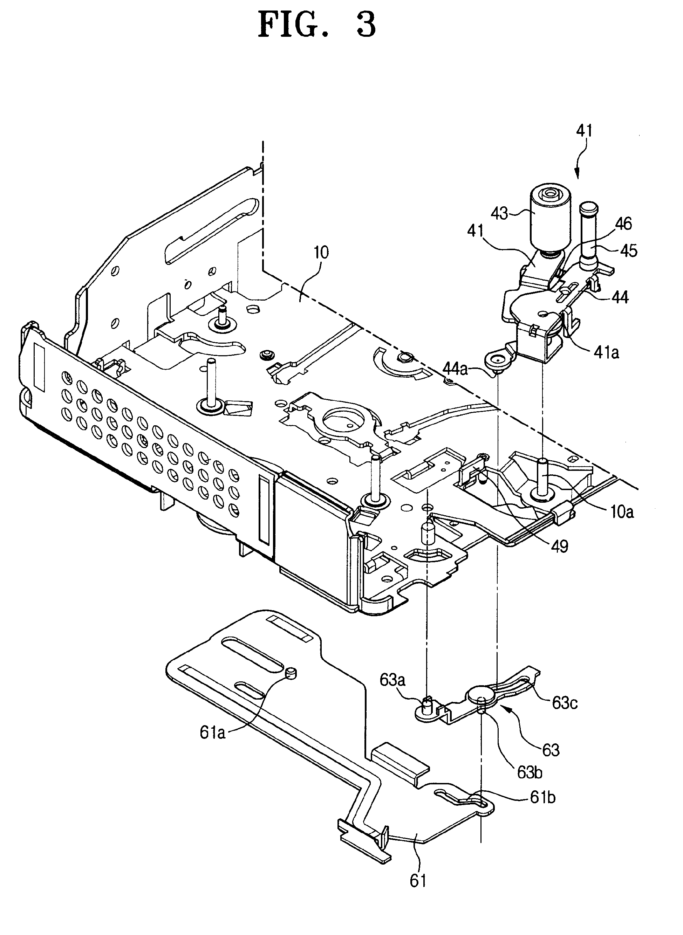

As shown in Figures 2 and 3, the sliding member 61 has a cam boss 61 a which is inserted into a cam recess 17a of the main cam gear 17. Therefore, the sliding member 61 is moved in the M1 direction or in the M2 direction according to the rotating direction of the main cam gear 17. The sliding member 61 is connected to the pivoting unit 41 using the connection movement member 63. A pivoting pin 63a which is provided at one end of the connection movement member 63 is rotatably engaged with the deck 10. A connection movement pin 63b which is provided substantially at the centre of the connection movement member 63 is connected to a cam recess 61b formed in the sliding member 61. A connection movement pin 44a provided in the pivoting unit 41 is engaged with the cam recess 63c provided at the other end of the connection movement member 63, and is moved by this connection. The connection movement pin 44a is integrally formed in the review arm 44. By means of the above-described structure, when the sliding member 61 is moved in the M1 direction, as shown in Figure 4, the pivoting unit 41 moves with the connection movement member 63, and is pivoted in the R direction and thus moved to the first position. If the sliding member 61 is moved in the M2 direction in the first position of Figure 4, the pivoting unit 41 is moved to the second position as shown in Figure 2. As described above, the pivoting range of the pivoting unit 41 is limited by the mechanism in which the sliding member 61 is mutually moved in connection with the connection movement member 63.

An interfering boss 42a is provided in the pinch arm 42. Preferably, the interfering boss 42a is integral to, and extends from, the pinch arm 42 by a predetermined distance. The interfering boss 42a crosses the moving path of the pole base assembly 30. When the pinch arm 42 is moved to the second position as shown in Figure 2, the interfering boss 42a makes contact with the pole base assembly 30. Thus, the pole base assembly 30 is prevented from being moved to the insertion recess 14a when it is unloaded.

The restricting boss 49 is integral to the deck 10 so that it protrudes at a predetermined height. The restricting boss 49 restricts the pinch arm 42 so that the pinch arm 42 is stopped at the second position. This prevents the pinch arm 42 from being pushed by the pole base assembly 30 and thus being forcibly moved further.

Since the loading gears 52, 54 move in connection with each other, if the movement of one pole base assembly 30 of the pair of pole base assemblies 20, 30 is restricted, the other pole base assembly 20 is also restricted from being moved into the insertion recess 13a.

Due to the structure of the present invention described above, the pole base assemblies 20, 30 engaged with the guide rails 13, 14 are prevented from being moved into the insertion recess 13a, 14a by the deviation preventing unit 40.

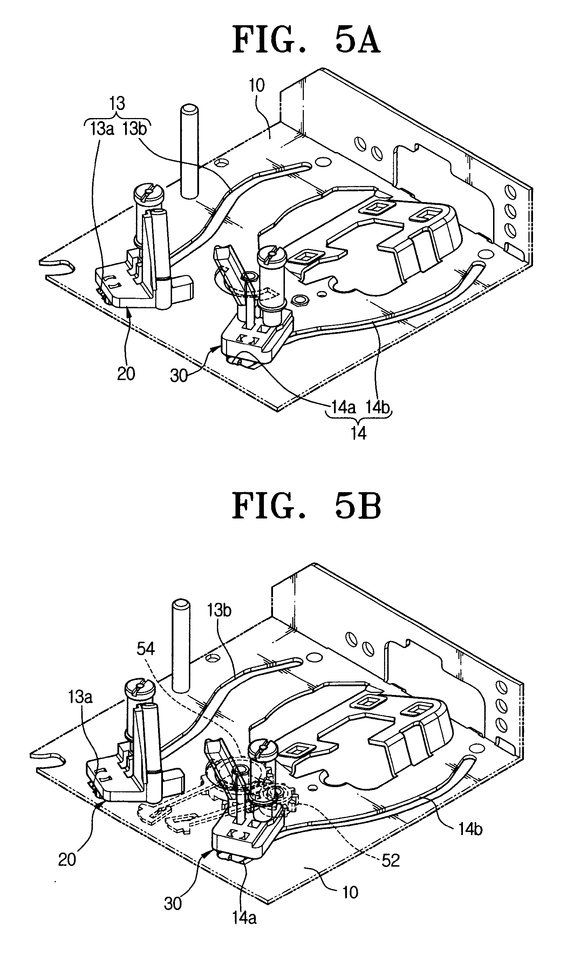

First, as shown in Figure 5A in the case of the above, the pair of pole base assemblies 20, 30 are inserted into the insertion recesses 13a, 14a of the deck 10 and are assembled to be slidably moved in the slits 13b, 14b.

Thereafter, as shown in Figure 5B, the loading gears 52, 54 are slidably engaged with the bottom surface of the deck 10. One loading gear 54 rotates when it is driven as it is connected to the main cam gear 17. Thus, the loading gear 54 is connected with the loading motor 11 when driven.

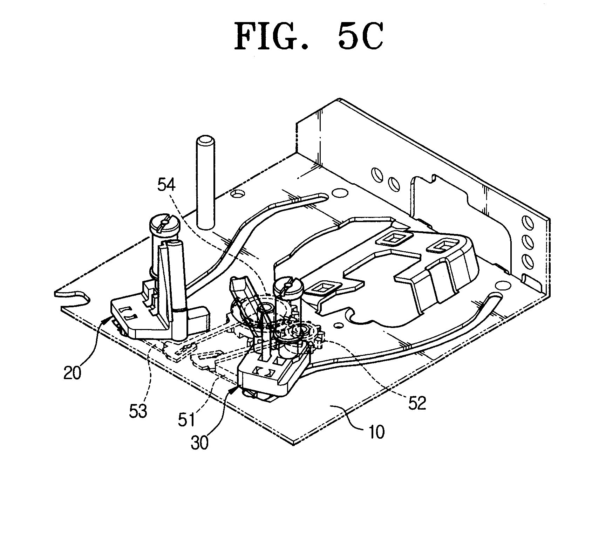

As shown in Figure 5C, the pair of pole base assemblies 20, 30 are assembled to be connected with the loading gears 52, 54 by the links 51, 53 respectively. The assembly is such that they move in connection with each other.

As described above, after the pole base assemblies 20, 30 are slidably engaged with the guide rails 13, 14 of the deck 10, the pivoting unit 41 is assembled to the deck 10. More specifically, as shown in Figure 3, the pivoting unit 41 is engaged with the deck 10 as the fixing shaft 10a protruding from the deck 10 is inserted into the pivoting shaft hole 41a of the pivoting unit 41. Next, the connection movement member 63 and the sliding member 61 are assembled on the bottom surface of the deck 10.

As shown in Figure 2, the interfering boss 42a of the pinch arm 42 is assembled to be located forward relative to the unloading direction of the pole base assembly 30.

In an embodiment of the present invention, the main cam gear 17 is rotatably driven in the arrow direction (anti-clockwise direction), the pair of pole base assemblies 20, 30 are moved towards the head drum 11 along the guide rails 13, 14 so that the magnetic tape is wound on the head drum 11. At the same time the sliding member 61 is moved in the M1 direction so that the connection movement member 63 is pivoted in the anti-clockwise direction about the pivoting pin 63a. Thus, the pivoting unit 41 is pivoted in the clockwise direction in connection with the connection movement member 63. As shown in Figure 4, each of the pole base assemblies 20, 30 is moved to an end portion of each of the guide rails 13, 14, and the pinch roller 43 is moved in the arrow X-direction so that it presses on the capstan shaft 18a. The review arm 44 is pressed in the arrow T-direction through the connection movement member 63. That is, the pinch arm 42 and the review arm 44 are pivoted at the same time until the pinch roller 43 makes contact with the capstan shaft 18a. After the pinch roller 43 makes contact with the capstan shaft 18a, only the review arm 44 moves further. Therefore, the pinch arm 42 is pressed against the capstan shaft 18a by the resilient force of the spring 46 connected to the review arm 44. This guides the magnetic tape that travels between the capstan shaft 18a and the pinch roller 43.

In Figure 4, the main cam gear 17 is rotated in the clockwise direction to unload a magnetic tape. The pole base assemblies 20, 30 and the pivoting unit 41 are returned at the same time to an initial position as shown in Figure 2. Since the moving ranges of the sliding member 61 and the connection movement member 63 which are moved in connection with each other are restricted, the pinch arm 42 is restricted from being pivoted in the anti-clockwise direction when it is at a predetermined position. The interfering boss 42a is located at the position adjacent to the insertion recess 14a. In this state, when the pole base assembly 30 is returned towards the insertion recess 14a along the slit 14b, it is restricted from being moved further as it makes contact with the interfering boss 42a. The pole base assembly 20, which is moved in connection with the pole base assembly 30 by driving gears 52, 54, cannot be moved toward the insertion recess 13a and is stopped. Thus, the pole base assemblies 20, 30 are prevented from being moved through the insertion recesses 13a, 14a.

More preferably, the anti-clockwise pivoting range of the pinch arm 42 can be more securely restricted when the restriction boss 49 is formed in the deck 10. Even when the force by which the pole base assembly 30 is returned towards the insertion recess 14a is further applied, the pinch arm 42 is caught by the restriction boss 49 so that it is prevented from being moved further.

As described above, according to an embodiment of the present invention, the pole base assemblies can be prevented from being separated from the guide rails formed in the deck. Therefore, the reliability of the product can be increased by preventing the disorder and the malfunctioning of the device caused by deviations of the pole base assemblies.

## Claims

1. A tape deck (10) having a pole base assembly (20,30) movable along a guide (13b,14b) formed in the deck (10), **characterised in that** the pole assembly (20,30) has a portion for retaining the assembly in the guide (13b,14b) and the guide (12b, 14b) being formed with an insertion portion (13a,14a) allowing the portion of the pole base assembly (20,30) to pass therethrough.

2. A tape deck (10) according to claim 1 comprising means (42a) for restricting the movement of the pole base assembly (20,30) along the guide (13b,14b).

3. A tape deck (10) according to claim 2, wherein the means (42a) for restricting the movement is configured to prevent the pole base assembly (20,30) from separating from the guide (13b,14b).

4. A tape deck (10) according to claim 3, wherein the means for restricting the movement (42a) is configured to prevent the pole base assembly (20,30) from reaching the insertion portion (13a,14a).

5. A magnetic recording and reproducing device comprising:
a pole base assembly for loading a magnetic tape by guiding the magnetic tape so that the magnetic tape is wound on a head drum and for unloading the magnetic tape by returning the magnetic tape from the head drum;
a deck having a guide rail formed thereon, the guide rail including an insertion recess into which the pole base assembly is inserted and a slit connected to the insertion recess to guide the loading and unloading of the pole base assembly; and
a deviation preventing unit for preventing the deviation of the pole base assembly inserted into the guide rail.

6. The magnetic recording and reproducing device of claim 5, wherein the deviation preventing unit comprises:
a pivoting unit pivotally installed in the deck for restricting movement of the pole base assembly into an insertion recess when the pole base assembly is unloaded; and
a restriction boss fixed to the deck for restricting the pivoting unit from being moved by being pushed by the pole base assembly moving in the unloading direction.

7. The magnetic recording and reproducing device of claim 6, wherein the pivoting unit comprises:
a pinch arm installed in the deck to be moved between a first position for guiding the traveling of the magnetic tape during the loading and a second position for restricting the movement of the pole base assembly during the unloading;
a pinch roller installed at one end of the pinch arm; and
an interfering boss which is extended by a predetermined distance from the pinch arm to make contact with the pole base assembly at the second position.

8. The magnetic recording and reproducing device of claim 7, wherein the pivoting unit further comprises a review arm installed coaxially with the pinch arm to be pivoted, for guiding the traveling the magnetic tape; and a spring for connecting the review arm and the pinch arm.

9. The magnetic recording and reproducing device of claim 7, wherein the interfering boss is integrally formed in the pinch arm.

10. The magnetic recording and reproducing device of claim 5, wherein the restriction boss is integrally formed in the deck to be protruded at a predetermined height.

11. The magnetic recording and reproducing device of claim 5, wherein the deviation preventing unit comprises:
a pivoting unit pivotally installed in the deck for restricting movement of the pole base assembly into the insertion recess during unloading of the pole base assembly; and
a connection movement unit movably installed in the deck, for restricting the pivoting range of the pivoting unit.

12. The magnetic recording and reproducing device of claim 11, wherein the connection movement unit comprises:
a sliding member slidably installed in the deck; and
a connection movement member rotatably installed in the deck, and moving in connection with the sliding member and the pivoting member respectively.

13. The magnetic recording and reproducing device of claim 12, wherein the deviation preventing unit further comprises a restriction boss which is fixed to the deck and restricts the pivoting unit from being pushed by the pole base assembly moving in an unloading direction.

14. The magnetic recording and reproducing device of claim 11, wherein the deviation preventing unit further comprises a restriction boss which is fixed to the deck and restricts the pivoting unit from being pushed by the pole base assembly moving in an unloading direction.
